# EUROPÄISCHE PATENTSCHRIFT

(11) **EP 3 406 898 B1**
(45) Veröffentlichungstag und Bekanntmachung des Hinweises auf die Patenterteilung: **24.11.2021**
(21) Anmeldenummer: 18172806.4
(22) Anmeldetag: 17.05.2018
(51) Int. Cl.: F03D 80/80, F03D 80/50, F03D 13/10

(54) **GONDELKOMPONENTE FÜR EINE WINDENERGIEANLAGE UND VERFAHREN ZUM MONTIEREN EINER GONDELKOMPONENTE**
NACELLE COMPONENT FOR A WIND ENERGY ASSEMBLY AND METHOD FOR MOUNTING A NACELLE COMPONENT
COMPOSANT DE NACELLE POUR UNE ÉOLIENNE ET PROCÉDÉ DE MONTAGE D'UN COMPOSANT DE NACELLE

(30) Priorität: 18.05.2017 DE 102017004800
(43) Veröffentlichungstag der Anmeldung: 28.11.2018
(73) Patentinhaber: Senvion GmbH, 22297 Hamburg (DE)
(72) Erfinder: Trede, Alf, 25885 Immenstedt (DE)
(74) Vertreter: Glawe, Delfs, Moll

(56) Entgegenhaltungen:
- EP-A1- 2 759 701
- WO-A1-2016/116112
- DE-A1-102007 062 622
- DE-C1- 10 013 442
- US-A1- 2003 071 469
- US-A1- 2009 129 931
- US-A1- 2013 234 443

## Beschreibung

Die Erfindung betrifft eine Gondelkomponente für eine Windenergieanlage. Die Erfindung betrifft außerdem ein Verfahren zum Montieren einer Gondelkomponente.

Bei Windenergieanlagen ist üblicherweise eine Gondel drehbar auf einem Turm angeordnet. Die Gondel trägt einen Rotor, der über eine Rotorwelle an einem Generator angeschlossen ist. Der Rotor wird durch den Wind in Drehung versetzt und treibt den Generator an, sodass elektrische Energie erzeugt wird. Durch Drehen der Gondel relativ zu dem Turm kann der Rotor in Windrichtung ausgerichtet werden.

Mit zunehmender Leistung werden die Komponenten der Windenergieanlage größer und schwerer, wodurch der Aufwand beim Transport und bei der Montage ansteigt. Es ist bekannt, eine Gondel aus mehreren Modulen zusammenzusetzen, WO 2016/116112 A1, EP 2 573 387 A1. Die einzelnen Module können mit überschaubarem Aufwand aus der Fertigungsstätte zu dem Ort transportiert werden, an dem die Windenergieanlage errichtet wird. Allerdings fällt beim Errichten der Windenergieanlage einiger Aufwand an, wenn die Gondel aus einer größeren Zahl von Modulen zusammengesetzt werden muss. US 2013/234443 A1 offenbart ein weiteres Beispiel einer Gondel einer Windenergieanlage.

Der Erfindung liegt die Aufgabe zugrunde, eine Gondelkomponente und ein Verfahren zum Montieren einer Gondelkomponente vorzustellen, mit denen sowohl der Transportaufwand als auch der Aufwand beim Errichten der Windenergieanlage gering gehalten werden können. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Die erfindungsgemäße Gondelkomponente ist in Anspruch 1 definiert. Sie umfasst ein Maschinenträgermodul und ein Elektromodul. Das Maschinenträgermodul und das Elektromodul sind jeweils in Längsausdehnung größer als in Querausdehnung. Im zusammengesetzten Zustand der Gondelkomponente ist das Maschinenträgermodul mit seiner Längsausdehnung entlang einer senkrechten Ebene ausgerichtet, die sich durch die Rotorwellenachse erstreckt. Das Elektromodul schneidet im zusammengesetzten Zustand mit seiner Längsausdehnung die senkrechte Ebene, die sich durch die Rotorwellenachse erstreckt. Zusammengesetzter Zustand bezeichnet den Zustand, in dem das Elektromodul bestimmungsgemäß mit dem Maschinenträgermodul verbunden ist.

Indem die beiden Module in der Gondelkomponente mit unterschiedlicher Ausrichtung angeordnet werden, kann der zur Verfügung stehende Raum effektiv ausgenutzt werden, wodurch die Gondel aus einer verminderten Zahl von Modulen zusammengesetzt werden kann. Trotzdem sind die Module noch so dimensioniert, dass sie gut transportiert werden können. Durch das quer angeordnete Elektromodul kann außerdem eine günstige Lastverteilung erreicht werden, weil die auf dem Elektromodul angeordneten Komponenten einen verringerten Abstand zu der Drehachse der Gondel haben. Dadurch kann das Lastmoment reduziert werden.

Das Maschinenträgermodul und/oder das Elektromodul können bezogen auf die mit der Längsausdehnung und der Querausdehnung aufgespannte Ebene eine rechteckige Form oder eine an ein Rechteck angenäherte Form haben. Bei einem Rechteck bezeichnet die Längsausdehnung die längere der beiden Achsen und die Querausdehnung die kürzere der beiden Achsen. Haben das Maschinenträgermodul und/oder das Elektromodul eine von einem Rechteck abweichende Form, so beziehen sich die erfindungsgemäße Längsausdehnung und Querausdehnung auf das kleinste Rechteck, mit dem das betreffende Modul umgeben werden kann.

Im zusammengesetzten Zustand der Gondelkomponente kann die Querausdehnung des Maschinenträgermoduls horizontal ausgerichtet sein. Die Längsausdehnung des Maschinenträgermoduls kann sich parallel zu der Rotorwellenachse erstrecken. Die Längsausdehnung des Elektromoduls kann sich in horizontaler Richtung erstrecken und unter einem rechten Winkel zu der Rotorwellenachse ausgerichtet sein. Die Querausdehnung des Elektromoduls kann sich parallel zu der Rotorwellenachse erstrecken. Die Querausdehnung des Maschinenträgermoduls und die Längsausdehnung des Elektromoduls sind vorzugsweise parallel zueinander. Die Querausdehnung des Elektromoduls kann in Verlängerung der Längsausdehnung des Maschinenträgermoduls angeordnet sein

Das Maschinenträgermodul kann eine Aufnahme für eine Rotorwelle umfassen. Durch die Aufnahme kann die Richtung der Rotorwellenachse definiert sein. Die Aufnahme kann insbesondere so gestaltet sein, dass die Rotorwelle sich im montierten Zustand parallel zu der Längsausdehnung des Maschinenträgermoduls erstreckt. Die Aufnahme kann Lagerböcke aufweisen, an der eines oder mehrere Lager für die Rotorwelle angebracht werden können. Möglich ist auch, dass das Maschinenträgermodul in einen vormontierten Zustand gebracht wird, in dem eine Rotorwelle von dem Maschinenträgermodul getragen wird und über Lager drehbar relativ zu dem Maschinenträgermodul gelagert ist.

Das Maschinenträgermodul kann eine Aufnahme für ein Getriebe umfassen. Die Aufnahme für das Getriebe kann separat von der Aufnahme für die Rotorwelle sein. Möglich ist auch, dass das Maschinenträgermodul eine gemeinsame Aufnahme umfasst, die die Rotorwelle und das Getriebe trägt. Das Maschinenträgermodul kann in einen vormontierten Zustand gebracht werden, in dem die Rotorwelle drehbar relativ zu dem Maschinenträgermodul gelagert ist und das Getriebe in einer festen Position relativ zu dem Maschinenträgermodul angebracht ist. Die Rotorwelle kann an die langsame Welle des Getriebes angeschlossen sein. Die schnelle Welle kann an einem gegenüberliegenden Ende des Getriebes angeordnet sein und sich parallel zu der Längsausdehnung des Maschinenträgermoduls erstrecken. An dem anderen Ende der Rotorwelle kann eine Rotornabe angebracht sein. Die Rotornabe kann eine Mehrzahl von Anschlüssen für Rotorblätter aufweisen, insbesondere drei Anschlüsse für Rotorblätter.

Die erfindungsgemäße Gondelkomponente kann ein Getriebe umfassen. Das Getriebe kann über eine Getriebeaufnahme mit dem Maschinenträgermodul und/oder mit dem Elektromodul verbunden sein. Zwischen dem Getriebe und der Getriebeaufnahme kann eine Drehmomentstütze angeordnet sein, die einer Drehung des Getriebes relativ zu der Getriebeaufnahme entgegenwirkt. Die Drehmomentstütze kann einen Getriebespant umfassen, der starr mit der Getriebeaufnahme verbunden ist. Zwischen dem Getriebespant und dem Getriebekörper kann eine Mehrzahl von Aufhängungselementen angeordnet sein, insbesondere wenigstens drei Aufhängungselemente, vorzugsweise wenigstens fünf Aufhängungselemente, weiter vorzugsweise wenigstens zehn Aufhängungselemente. Die Aufhängungselemente können elastisch sein und insbesondere so ausgelegt sein, dass sie eine elastische Ausgleichsbewegung zwischen dem Getriebespant und dem Getriebekörper zulassen, wenn ein großes Drehmoment auf die langsame Getriebewelle wirkt. Es kann eine zu der langsamen Getriebewelle senkrechte Ebene geben, die die Aufhängungselemente der Drehmomentstütze schneidet. Eines oder mehrere oder alle der Aufhängungselemente können einen Lagerbolzen umfassen. Der Lagerbolzen kann sich parallel zur Rotorwelle erstrecken. Der Lagerbolzen kann mit dem Getriebespant oder mit dem Getriebekörper starr verbunden sein, während die Verbindung zwischen dem Lagerbolzen und dem jeweils anderen Element elastisch gestaltet ist. Beispielsweise kann um den Lagerbolzen herum ein elastisches Material angeordnet sein, das durch eine Bewegung des Getriebekörpers relativ zu dem Getriebespant komprimiert werden kann. Die Aufhängungselemente können kranzförmig um die langsame Welle des Getriebes herum angeordnet sein, mit anderen Worten kann die Drehmomentstütze eine Mehrzahl von Aufhängungselementen umfassen, die mit einem übereinstimmenden Abstand zu der langsamen Welle des Getriebes angeordnet sind. Die Aufhängungselemente können gleichverteilt über den Umfang der langsamen Getriebewelle angeordnet sein. Möglich ist auch, dass die Aufhängungselemente nicht gleichverteilt über den Umfang der langsamen Getriebewelle angeordnet sind. In einer Ausführungsform umfasst die Drehmomentstütze einen ersten Umfangsabschnitt, der mit Aufhängungselementen versehen ist, und einen zweiten Umfangsabschnitt, der frei von Aufhängungselementen ist. Der erste Umfangsabschnitt kann sich beispielsweise über einen Umfangswinkel zwischen 180° und 270° erstrecken. Der zweite Umfangsabschnitt kann sich beispielsweise über einen Umfangswinkel zwischen 90° und 180° erstrecken. Innerhalb des ersten Umfangsabschnitts können die Aufhängungselemente gleichmäßig über den Umfang verteilt sein. Durch eine solche Drehmomentstütze kann das Getriebe in Querrichtung schmaler gestaltet werden als bei einer konventionellen Drehmomentstütze, die zwei in Querrichtung vorspringende Arme umfasst. Dies kann von Vorteil sein, wenn ein Austausch des Getriebes erforderlich wird. Beispielsweise kann ein kompaktes Getriebe entlang der Längsachse des Maschinenträgermoduls in das Elektromodul gezogen werden und von dort zum Fuß des Turms abgeseilt werden.

In einer Ausführungsform der erfindungsgemäßen Gondelkomponente kann ein Generator an die schnelle Welle des Getriebes angeflanscht sein, wobei der Generator sich im montierten Zustand im Maschinenträgermodul befinden kann; das Maschinenträgermodul kann eine eigene Aufnahme für den Generator, eine Aufnahme für die Einheit aus Generator und Getriebe oder eine gemeinsame Aufnahme für Generator, Getriebe und Rotorwelle umfassen. Das Maschinenträgermodul kann in einen vormontierten Zustand gebracht werden, in dem die Rotorwelle drehbar gegenüber dem Maschinenträgermodul gelagert ist und über das Getriebe mit dem in einer festen Position relativ zu dem Maschinenträgermodul angebrachten Generator verbunden ist.

Das Maschinenträgermodul kann einen Drehkranz umfassen, über den das Maschinenträgermodul an einen Turm einer Windenergieanlage angeschlossen werden kann. Die Achse des Drehkranzes kann zusammenfallen mit einer Drehachse, um die das Maschinenträgermodul bzw. eine Gondel, in der das Maschinenträgermodul aufgenommen ist, relativ zu dem Turm gedreht werden können. Die Drehachse kann mit einer Mittelachse des Turms übereinstimmen. Der Drehkranz kann als Anschluss für ein Lager ausgebildet sein, sodass ein Lagerring an dem Drehkranz und der andere Lagerring an dem oberen Ende des Turms angeschlossen werden kann. Mit einer Rotation des Lagers kann das Maschinenträgermodul relativ zu dem Turm gedreht werden. Das Lager kann im vormontierten Zustand mit dem Maschinenträgermodul verbunden sein.

Das Elektromodul kann in einer Ausführungsform der erfindungsgemäßen Gondelkomponente eine Aufnahme für einen Generator umfassen. Das Elektromodul kann in einen vormontierten Zustand gebracht werden, in dem der Generator mit dem Elektromodul verbunden ist. Im vormontierten Zustand sind das Elektromodul und das Maschinenträgermodul noch nicht miteinander verbunden. Der Generator kann so angeordnet sein, dass eine Eingangswelle des Generators sich parallel zu der Querausdehnung des Elektromoduls erstreckt. Die Eingangswelle des Generators kann außermittig in dem Elektromodul angeordnet sein, sodass bezogen auf die Längsausdehnung des Elektromoduls der Abstand zu dem einen Ende des Elektromoduls kleiner ist als der Abstand zu dem gegenüberliegenden Ende des Elektromoduls. Nimmt man einen Blickwinkel vom Generator in Richtung Eingangswelle ein, so kann der Abstand zu dem rechten Ende des Elektromoduls kleiner sein als der Abstand zu dem linken Ende des Elektromoduls. Das Elektromodul kann in einen vormontierten Zustand gebracht werden, in dem der Generator mit dem Elektromodul verbunden ist. Der Generator kann sich über wenigstens 40 %, vorzugsweise wenigstens 60 %, weiter vorzuweisen wenigstens 80 % der Querausdehnung des Elektromoduls erstrecken.

Das Elektromodul kann mit einer Aufnahme für einen Umrichter ausgestattet sein. Das Elektromodul kann in einen vormontierten Zustand gebracht werden, in dem ein Umrichter mit dem Elektromodul verbunden ist. Es kann eine elektrische Verbindung zwischen dem Umrichter und dem Generator hergestellt werden, sodass ein Test des fehlerfreien Zusammenspiels zwischen dem Umrichter und dem Generator (Funktionstest) möglich ist. Der Umrichter kann bezogen auf die Längsausdehnung des Elektromoduls von dem Generator beabstandet sein. Bezogen auf die Querausdehnung des Elektromoduls kann der Umrichter mit dem Generator überlappen. Ist der Generator außermittig in dem Elektromodul angeordnet, so kann der Umrichter in dem größeren der beiden durch den Generator definierten Teilabschnitte des Elektromoduls angeordnet sein.

Das Elektromodul kann eine Aufnahme für einen Transformator aufweisen. Das Elektromodul kann in einen vormontierten Zustand gebracht werden, in dem ein Transformator mit dem Elektromodul verbunden ist. Es kann eine elektrische Verbindung zwischen dem Transformator und dem Umrichter hergestellt werden, sodass ein Test des fehlerfreien Zusammenspiels zwischen dem Transformator, dem Umrichter und/oder dem Generator möglich ist.

An den Transformator kann ein Mittelspannungskabel angeschlossen sein, das dazu ausgelegt ist, die mit dem Generator erzeugte elektrische Leistung an ein Anschlussnetz zu übertragen. Im zusammengesetzten Zustand der Gondelkomponente kann das Mittelspannungskabel über das Maschinenträgermodul in Richtung eines Turms der Windenergieanlage geführt sein.

Der Transformator kann bezogen auf die Längsausdehnung des Elektromoduls von dem Generator beabstandet sein. Bezogen auf die Querausdehnung des Elektromoduls kann der Transformator mit dem Generator überlappen. Ist der Generator außermittig in dem Elektromodul angeordnet, so kann der Transformator in dem kleineren der beiden durch den Generator gebildeten Teilabschnitte des Elektromoduls angeordnet sein.

Das Elektromodul kann eine Aufnahme für einen oder mehrere Schaltschränke umfassen. Das Elektromodul kann in einen vormontierten Zustand gebracht werden, in dem einer oder mehrere Schaltschränke mit dem Elektromodul verbunden sind. In den Schaltschränken kann eine Steuerung für den Generator, den Umrichter und/oder den Transformator angeordnet sein. Es kann eine elektrische Verbindung zwischen der Steuerung, dem Generator, dem Umrichter und/oder dem Transformator hergestellt werden, sodass ein Test des fehlerfreien Zusammenspiels der betreffenden Komponenten möglich ist.

Der oder die Schaltschränke können bezogen auf die Längsausdehnung des Elektromoduls von dem Generator beabstandet sein. Bezogen auf die Querausdehnung des Elektromoduls können die Schaltschränke mit dem Generator überlappen. Ist der Generator außermittig in dem Elektromodul angeordnet, so können die Schaltschränke in dem größeren der beiden durch den Generator gebildeten Teilabschnitte des Elektromoduls angeordnet sein. Die Schaltschränke können bezogen auf die Querausdehnung des Elektromoduls von dem Umrichter beabstandet sein. Bezogen auf die Längsausdehnung des Elektromoduls können die Schaltschränke mit dem Umrichter überlappen.

Das Elektromodul kann mit einem Kühlsystem ausgestattet sein. Das Kühlsystem kann dazu ausgelegt sein, den Generator, den Transformator und/oder den Umrichter zu kühlen. Möglich ist auch, dass das Kühlsystem dazu ausgelegt ist, das Getriebe zu kühlen. Im Betriebszustand der Gondel kann sich eine Leitung zwischen dem Elektromodul und dem Maschinenträgermodul erstrecken, über die ein Kühlmedium zwischen dem Kühlsystem und dem Getriebe ausgetauscht wird.

Das Elektromodul kann einen Zentralrahmen umfassen, der sich nur über einen Teil der Längsausdehnung des Elektromoduls erstreckt. Auf einer Seite oder auf beiden Seiten des Zentralrahmens kann sich ein Seitenrahmen anschließen, sodass der Zentralrahmen und die Seitenrahmen sich in Summe über die Längsausdehnung des Elektromoduls erstrecken. Der Zentralrahmen kann massiv ausgebildet sein und schwerere Komponenten des Elektromoduls tragen. Zu den schweren Komponenten kann beispielsweise der Generator gehören. Die Seitenrahmen können weniger massiv ausgebildet sein als der Zentralrahmen und leichtere Komponenten des Elektromoduls tragen. Zu den leichteren Komponenten können der Umrichter, der Transformator und/oder Schaltschränke gehören.

Das Elektromodul kann ein Rahmenteil umfassen, innerhalb dessen ein nach unten offener Durchbruch ausgebildet ist. Der Durchbruch kann so bemessen und angeordnet sein, dass Komponenten einer auf einem Turm einer Windenergieanlage angeordneten Gondel durch den Durchbruch hindurch nach unten abgelassen werden können, beispielsweise zum Zwecke der Wartung oder Reparatur. Dabei kann es sich beispielsweise um Komponenten handeln, die im Betrieb der Windenergieanlage mit dem Maschinenträgermodul und/oder dem Elektromodul verbunden sind. Das Rahmenteil kann den Durchbruch rundherum umschließen. Möglich ist auch ein Rahmenteil, das den Durchbruch nur teilweise umschließt. Das Rahmenteil kann einen ersten Hauptträger und einen zweiten Hauptträger umfassen, wobei die Hauptträger den Durchbruch zwischen sich einschließen. Die Hauptträger können sich in Querrichtung des Elektromoduls erstrecken. Bezogen auf die Längsrichtung des Elektromoduls kann der Durchbruch zwischen den Hauptträgern angeordnet sein. In einer Ausführungsform stimmt das Rahmenteil mit dem Zentralträger des Elektromoduls überein.

Das Elektromodul umfasst einen Komponententräger. Der Komponententräger kann Aufnahmen für Elemente des Elektromoduls umfassen; insbesondere kann der Komponententräger Aufnahmen für den Generator und/oder den Transformator umfassen. Der Komponententräger kann mit dem Rahmenteil des Elektromoduls verbunden sein. Die Befestigung zwischen dem Komponententräger und dem Rahmenteil kann lösbar sein.

Im verbundenen Zustand kann der Komponententräger unterhalb des Rahmenteils angeordnet sein. Mit dem Komponententräger verbundene Komponenten können in den Durchbruch des Rahmenteils hineinragen. Der Komponententräger kann größer sein als der Durchbruch, sodass mit dem Komponententräger verbundene Komponenten seitlich benachbart zu dem Durchbruch angeordnet sind, wenn der Komponententräger mit dem Rahmenteil verbunden ist. Eine Komponente des Elektromoduls, die durch den Komponententräger aufgenommen wird, kann auf dem Komponententräger ruhen und/oder an dem Komponententräger befestigt sein. Zusätzlich kann die Komponente an dem Rahmenteil, einem Seitenrahmen oder sonstigen Elementen des Elektromoduls befestigt sein.

Das Elektromodul kann in einen vormontierten Zustand gebracht werden, in dem der Komponententräger mit dem Rahmenteil verbunden ist und in dem ein oder mehrere Komponenten des Elektromoduls mit dem Komponententräger verbunden sind. Alternativ kann der Komponententräger auch in einem beliebigen späteren Stadium der Montage mit dem Rahmenteil des Elektromoduls verbunden werden oder wieder von dem Rahmenteil des Elektromoduls getrennt werden. Der Komponententräger kann so beschaffen sein, dass er, bestückt mit den von dem Komponententräger aufgenommenen Elementen des Elektromoduls, mit einer Hebevorrichtung bewegt werden kann; der Komponententräger kann hierzu Anlenkeinrichtungen, beispielsweise in Form von Ösen, Umlenkrollen und/oder Winden umfassen. Alternativ oder zusätzlich kann der Komponententräger dazu ausgelegt sein, mit einer Hebeplattform angehoben zu werden; der Komponententräger kann hierzu beispielsweise eine flache Unterseite für ein stabiles Aufliegen auf der Hebeplattform aufweisen und/oder an den Kanten kompatibel mit Containerecken oder Twistlocks sein, wodurch eine feste Verbindung zu einer geeigneten Hebeplattform ermöglicht wird. Der erfindungsgemäße Komponententräger erleichtert das Manövrieren von Elementen des Elektromoduls zwischen der auf dem Turm installierten Gondel und dem Boden, wodurch ein Komponentenaustausch oder die Reparatur von Komponenten am Boden erleichtert werden.

In Form einer nicht beanspruchten Erfindung betrifft die Anmeldung außerdem ein System zum Ablassen einer Windenergieanlagenkomponente von der Gondel zum Boden. Das System umfasst eine Hebeplattform mit einem Hubweg, der sich zwischen der auf dem Turm angeordneten Gondel und dem Boden erstreckt. Die Hebeplattform kann ein Element der Gondel oder ein separates Teil sein. Während des Hubvorgangs kann die Hebeplattform an einem oder mehreren Seilen aufgehängt sein, die in geeigneter Weise eingeholt oder ausgelassen werden, beispielsweise durch Drehen einer oder mehrerer Winschen. In einer Ausführungsform ist der Antrieb zum Einholen oder Auslassen der Seile mit der Hebeplattform verbunden. Wenn die Hebeplattform am Boden steht, kann das Seil von der Gondel aus hereingeholt werden, während der Antrieb im Freilauf ist. Wenn ein Ende des Seils mit der Gondel verbunden ist, kann die Hebeplattform durch Betätigen des Antriebs angehoben werden. Wenn die Hebeplattform bis an die Gondel herangeführt ist, können eine oder mehrere Komponenten der Gondel auf die Hebeplattform gebracht werden und mit der Hebeplattform wieder abgelassen werden. Möglich ist auch, dass der Antrieb der Hebeplattform ein Element der Gondel ist.

In einer Ausführungsform entspricht die Hebeplattform dem Komponententräger des Elektromoduls. Der Komponententräger kann von dem Rahmenteil des Elektromoduls gelöst werden und zusammen mit den daran befestigten Komponenten als Hebeplattform abgelassen werden.

Wenn die Hebeplattform ein separates Teil ist, kann diese von unten an den Komponententräger des Elektromoduls herangeführt werden. Sobald der Komponententräger durch die Hebeplattform von unten abgestützt ist, kann der Komponententräger von dem Rahmenteil gelöst werden und mit der Hebeplattform nach unten gehoben werden. Um zu verhindern, dass der Komponententräger gegenüber der Hebeplattform verrutscht, kann ein Verbindungsmittel zwischen dem Komponententräger und der Hebeplattform vorgesehen sein, beispielsweise in Form von Containerecken/Twistlocks, wie sie von ISO-Containern bekannt sind Das System kann einen Servicekran umfassen. Der Servicekran kann dazu ausgelegt sein, auf einem Rahmen installiert zu werden; insbesondere kann der Servicekran dazu ausgelegt sein, auf dem Komponententräger oder der Hebeplattform installiert zu werden. Der Servicekran kann kompakte Ausmaße haben; vorzugsweise kann der Servicekran im Ganzen und in einsatzbereitem Zustand in einem ISO-Container transportiert werden. Der Servicekran kann dazu ausgelegt sein, größere Lasten anzuheben; eine größere Last kann beispielsweise das Getriebe oder der Generator sein. Der Servicekran kann genutzt werden, um das Getriebe und/oder den Generator ausgehend von einer Betriebsposition innerhalb der Gondel in eine Position zu bewegen, in der die Komponente aus der Gondel abgelassen werden kann.

Das System kann eine Hilfshebevorrichtung umfassen, wobei die Hilfshebevorrichtung zum Auf- und Abseilen kleinerer Lasten zwischen der auf dem Turm installierten Gondelkomponente und dem Boden ausgelegt sein kann. Eine kleinere Last können beispielsweise die Seile der Winden der Hebeplattform sein. Die Hilfshebevorrichtung kann beispielsweise ein Bordkran oder eine Winde sein. Das Maschinenträgermodul oder vorzugsweise das Elektromodul kann eine Aufnahme für die Hilfshebevorrichtung umfassen. Das Maschinenträgermodul oder das Elektromodul kann in einen vormontierten Zustand gebracht werden, in dem die Hilfshebevorrichtung mit dem Maschinenträgermodul oder dem Elektromodul verbunden ist. Als Anwendungsbeispiel des Systems ist jeweils das Ablassen einer Komponente aus der Gondel der Windenergieanlage beschrieben. In entsprechender Weise kann das System genutzt werden, um eine Komponente vom Boden zu der Gondel anzuheben und dort zu installieren. Die Erfindung betrifft außerdem entsprechende Verfahren zum Ablassen einer Komponente aus der Gondel einer Windenergieanlage und zum Anheben einer Komponente zu der Gondel einer Windenergieanlage.

Das Elektromodul und/oder das Maschinenträgermodul können Einhausungen umfassen, wobei die Einhausungen die Komponenten des Elektromoduls und/oder des Maschinenträgermoduls beispielsweise vor Umwelteinflüssen schützen. Die Einhausung des Elektromoduls kann selbsttragend sein. Dies kann insbesondere bedeuten, dass ein seitliches Einhausungsteil zwischen einem oberen Ende und einem unteren Ende erstreckt, ohne in der Fläche durch ein Rahmenskelett gestützt zu sein. Entlang der oberen, unteren und/oder seitlichen Enden des Einhausungsteils können sich Rahmenstreben des Elektromoduls erstrecken. Entlang seiner Kanten kann das Einhausungsteil mit den Rahmenstreben verbunden sein. Die selbsttragende Ausführung spart Platz und Gewicht.

Die Einhausung des Elektromoduls kann aus einem elektrisch leitfähigen Material und/oder aus einem Material mit guter Wärmeleitfähigkeit gefertigt sein. Insbesondere kann die Einhausung wenigstens abschnittsweise aus Blech gefertigt sein. Aufgrund der elektrischen Leitfähigkeit kann die Einhausung als faradayscher Käfig wirken, wodurch ein verbesserter Blitzschutz gegeben ist. Aufgrund einer guten Wärmeleitfähigkeit kann die Einhausung in das bestehende Kühlsystem integriert werden; die Wände des Elektromoduls können beispielsweise als Kühlelement genutzt werden. Die Wände des Elektromoduls können beispielsweise aus Trapezblech bestehen, wie es vom Aufbau eines ISO-Containers bekannt ist. Die Wände können eine hinreichende Stabilität aufweisen, so dass kleinere Elemente des Elektromoduls direkt an einer Wand aufgehängt werden können. Das Dach des Elektromoduls kann aus mehreren Segmenten bestehen, wobei einzelne Segmente solchermaßen verschiebbar gelagert sind, dass von oben ein Zugang ins Innere des Elektromoduls freigelegt werden kann; alternativ sind einzelne Segmente des Dachs oder das gesamte Dach abnehmbar ausgeführt. Das Elektromodul und/oder das Maschinenträgermodul können in einen vormontierten Zustand gebracht werden, in dem Teile der Einhausungen oder die gesamte Einhausung fest mit dem Elektromodul und/oder dem Maschinenträgermodul verbunden sind.

Im zusammengesetzten Zustand, in dem das Maschinenträgermodul und das Elektromodul miteinander verbunden sind, kann der Zentralrahmen des Elektromoduls sich in Verlängerung eines Rahmenelements des Maschinenträgermoduls erstrecken. Das Rahmenelement des Maschinenträgermoduls erstreckt sich vorzugsweise parallel zur Längsausdehnung des Maschinenträgermoduls. Das Maschinenträgermodul kann eine Verbindungseinrichtung zum Herstellen einer Verbindung mit dem Elektromodul umfassen. Die Verbindungseinrichtung kann beispielsweise Stehbolzen umfassen oder Bohrungen, durch die Bolzen hindurch geführt werden können. Die Verbindungseinrichtung kann an einer Querseite des Maschinenträgermoduls angeordnet sein, insbesondere an derjenigen Querseite, die von dem Rotor entfernt ist.

Das Elektromodul kann eine Verbindungseinrichtung zum Herstellen einer Verbindung mit dem Maschinenträgermodul umfassen. Die Verbindungseinrichtung kann beispielsweise Bohrungen umfassen, die passend zu Bohrungen oder Stehbolzen des Maschinenträgermoduls angeordnet sind. Möglich sind auch Stehbolzen, die passend zu Bohrungen des Maschinenträgermoduls angeordnet sind. Die Verbindungseinrichtung kann an einer Längsseite des Elektromoduls angeordnet sein, insbesondere an derjenigen Längsseite, zu der die Eingangswelle des Getriebes weist. Beim Herstellen der Verbindung zwischen dem Maschinenträgermodul und dem Elektromodul kann die Eingangswelle des Generators an die schnelle Welle des Getriebes angeschlossen werden. Die Eingangswelle des Generators kann im zusammengesetzten Zustand koaxial zur schnellen Welle des Getriebes ausgerichtet sein.

Die Verbindungseinrichtung zwischen dem Maschinenträgermodul und dem Elektromodul kann so gestaltet sein, dass das Maschinenträgermodul mittig an der Längsseite des Elektromoduls befestigt wird. Die Verbindungseinrichtung zwischen dem Maschinenträgermodul und dem Elektromodul ist vorzugsweise so stabil ausgebildet, dass das Maschinenträgermodul und das Elektromodul im zusammengesetzten Zustand als eine Einheit angehoben bzw. bewegt werden können. Das Maschinenträgermodul und/oder das Elektromodul können Anlenkeinrichtungen, beispielsweise in Form von Ösen umfassen, über die das Maschinenträgermodul und das Elektromodul als eine Einheit manövriert werden können.

Das Maschinenträgermodul und/oder das Elektromodul können mit einem Schienensystem ausgestattet sein, das dazu ausgelegt ist, eine Komponente der Gondel, deren Verbindung zu dem Maschinenträgermodul bzw. dem Elektromodul in einem Wartungszustand gelöst ist, relativ zu dem Maschinenträgermodul und/oder dem Elektromodul zu bewegen. Das Schienensystem kann einen mit dem Maschinenträgermodul verbundenen Abschnitt und/oder einen mit dem Elektromodul verbundenen Abschnitt umfassen. Das Schienensystem kann genutzt werden, um eine Komponente, die im Betrieb der Windenergieanlage mit dem Maschinenträgermodul verbunden ist, in Richtung des Elektromoduls zu bewegen. Aus dem Elektromodul heraus kann die Komponente zum Zwecke der Wartung oder Reparatur abgelassen werden. Ein solches Verfahren kann insbesondere nützlich sein, um einen Generator und/oder ein Getriebe aus der Gondel der Windenergieanlage abzulassen. Das Getriebe und der Generator können separat voneinander mit dem Schienensystem bewegt werden. Möglich ist auch, dass das Getriebe und der Generator gemeinsam als Einheit mit dem Schienensystem bewegt werden. Die Erfindung betrifft außerdem ein nicht beanspruchtes Wartungsverfahren, bei dem eine Komponente einer Windenergieanlage zunächst in im Wesentlichen horizontaler Richtung innerhalb der Gondel bewegt wird und dann aus der Gondel abgelassen wird. Die im Wesentlichen horizontale Bewegung kann unter Nutzung eines solchen Schienensystems stattfindet. Ein in dem Elektromodul vorgesehener Weg zum Ablassen einer Komponente der Gondel kann auf diese Weise auch für solche Komponenten genutzt werden, die im Betrieb der Windenergieanlage mit dem Maschinenträgermodul verbunden sind. Der Begriff Ablassen im Sinne der Erfindung umfasst sowohl einen Transportweg, bei dem die Komponente durch den Boden hindurch aus der Gondel entfernt wird, als auch einen Transportweg, bei dem die Komponente durch eine Seitenwand hindurch aus der Gondel entfernt wird, als auch einen Transportweg, bei dem die Komponente durch die Decke hindurch aus der Gondel entfernt.

Die Querausdehnung des Maschinenträgermoduls kann kleiner sein als die Längsausdehnung des Elektromoduls. Bezogen auf die Querausdehnung können das Maschinenträgermodul und das Elektromodul ähnlich dimensioniert sein. Insbesondere kann die Querausdehnung des Elektromoduls um weniger als 50 %, vorzugsweise weniger als 20 %, weiter vorzugsweise weniger als 10 % von der Querausdehnung des Maschinenträgermoduls abweichen. Die Querausdehnung des Maschinenträgermoduls und/oder die Querausdehnung des Elektromoduls können beispielsweise zwischen 2 m und 6 m, vorzugsweise zwischen 3 m und 5 m, weiter vorzugsweise zwischen 3,5 m und 4,5 m liegen. Mit einer Querausdehnung in dieser Größenordnung ist noch mit vertretbarem Aufwand ein Straßentransport möglich. Die Längsausdehnung des Maschinenträgermoduls und/oder die Längsausdehnung des Elektromoduls können beispielsweise zwischen 120 % und 400 %, vorzugsweise zwischen 150 % und 300 % der Querausdehnung des betreffenden Moduls liegen. Die Höhe des Maschinenträgermoduls und/oder des Elektromoduls sind vorzugsweise nicht größer als 4 m. Die Längsausdehnung des Elektromoduls kann im zusammengesetzten Zustand mit der Längsausdehnung des Maschinenträgermoduls einen rechten Winkel einschließen.

Die Erfindung betrifft auch eine nicht beanspruchte Gondel, die eine solche Gondelkomponente umfasst. An die Rotorwelle der Gondelkomponente kann ein Rotor angeschlossen sein. Die Gondel kann mit einer das Maschinenträgermodul und das Elektromodul umgebenden Einhausung versehen sein.

Die Erfindung betrifft außerdem eine nicht beanspruchte Windenergieanlage, bei der eine solche Gondel drehbar auf einem Turm angeordnet ist. Ein Azimutlager kann zwischen dem Maschinenträgermodul der Gondel und dem Turm angeordnet sein. Das Azimutlager kann an den Drehkranz der Maschinenträgermoduls angeschlossen sein. Ein Mittelspannungskabel kann sich von dem Elektromodul über das Maschinenträgermodul und durch den Turm hindurch bis zum Turmfuß erstrecken. Über das Mittelspannungskabel kann die mit dem Generator erzeugte elektrische Leistung an ein Anschlussnetz übertragen werden. Die Windenergieanlage kann eine Leistung von mindestens 2 MW haben. Die Windenergieanlage kann für einen Onshore-Betrieb ausgelegt sein.

Die Erfindung betrifft außerdem ein Verfahren zum Montieren einer Gondelkomponente einer Windenergieanlage gemäß Anspruch 14. Bei dem Verfahren werden ein Maschinenträgermodul und ein Elektromodul zu einem Montageort transportiert. Bei dem Transport sind das Maschinenträgermodul und/oder das Elektromodul in Längsrichtung ausgerichtet, d. h. die Bewegungsrichtung beim Transport ist parallel zu der Längsausdehnung des Maschinenträgermoduls bzw. des Elektromoduls. Am Montageort werden zudem das Maschinenträgermodul und das Elektromodul miteinander verbunden, sodass eine Querseite des Maschinenträgermoduls an eine Längsseite des Elektromoduls anstößt. Das Verfahren kann mit weiteren Merkmalen fortgebildet werden, die im Zusammenhang der erfindungsgemäßen Gondelkomponente beschrieben sind. Die Gondelkomponente kann mit weiteren Merkmalen fortgebildet werden, die im Zusammenhang dieses Verfahrens beschrieben sind.

Beim Transport können das Maschinenträgermodul und/oder das Elektromodul in einem vormontierten Zustand sein. Vor dem Herstellen der Verbindung mit dem Maschinenträgermodul kann das Elektromodul einem Funktionstest unterzogen werden, bei dem das fehlerfreie Zusammenspiel zwischen dem Generator, dem Umrichter, dem Transformator und/oder einer zu diesen Komponenten gehörigen Steuerung geprüft wird.

Die Erfindung betrifft außerdem ein nicht beanspruchtes Errichtungssystem für eine Windenergieanlage, bei dem eine Mehrzahl von Windenergieanlagenkomponenten an einem oberen Ende eines Turms befestigt wird. Das Errichtungssystem umfasst einen ersten Errichtungszustand, in dem eine erste Windenergieanlagenkomponente und eine zweite Windenergieanlagenkomponente zu einer ersten Transporteinheit verbunden sind sowie eine dritte Windenergieanlagenkomponente Element einer zweiten Transporteinheit ist. In einem zweiten Errichtungszustand sind die erste Windenergieanlagenkomponente und die dritte Windenergieanlagenkomponente zu einer dritten Transporteinheit verbunden, wobei die zweite Windenergieanlagenkomponente entweder ebenfalls Element der dritten Transporteinheit ist oder Element einer vierten Transporteinheit ist. Am Boden wird entweder der erste Errichtungszustand oder der zweite Errichtungszustand hergestellt. Abhängig von der Wahl des Errichtungszustands erfolgt das Errichten der Windenergieanlage entweder durch Anheben der ersten Transporteinheit und der zweiten Transporteinheit zum oberen Ende des Turms oder durch Anheben der dritten Transporteinheit und der vierten Transporteinheit zum oberen Ende des Turms.

Ein Errichtungszustand kann mehr als zwei Transporteinheiten umfassen. Eine Transporteinheit kann mehr als zwei Windenergieanlagenkomponenten umfassen.

In einem beispielhaften ersten Errichtungszustand besteht die erste Transporteinheit aus dem Maschinenträger. Die zweite Transporteinheit wird durch den Triebstrang (Rotorwelle plus Getriebe) gebildet. Eine dritte Transporteinheit wird durch das Elektromodul mit dem Generator, dem Umrichter und/oder weiteren elektrischen Komponenten gebildet. Eine vierte Transporteinheit kann der Rotor (Rotor plus Rotornabe) bilden. Alternativ können die Rotornabe und die Rotorblätter jeweils einzelne Transporteinheiten bilden. Diese beiden Möglichkeiten der Rotormontage geltend entsprechend für die nachfolgenden Errichtungszustände.

In einem beispielhaften zweiten Errichtungszustand bildet die Gondel, bestehend aus dem Maschinenträger, dem Elektromodul (mit Generator, Umrichter und/oder weiteren elektrischen Komponenten) eine erste Transporteinheit. Der Triebstrang bildet eine zweite Transporteinheit. Weitere Transporteinheiten können den Rotor entweder in seiner Gesamtheit oder in einzelnen Komponenten umfassen.

In einem beispielhaften dritten Errichtungszustand besteht die erste Transporteinheit aus dem Maschinenträger. Die zweite Transporteinheit besteht aus dem Triebstrang ohne Getriebe. Die dritte Transporteinheit besteht aus dem Getriebe. Die vierte Transporteinheit besteht aus dem Elektromodul (mit Generator, Umrichter und/oder weiteren elektrischen Komponenten). Weitere Transporteinheiten können den Rotor entweder in seiner Gesamtheit oder in einzelnen Komponenten umfassen.

In einem beispielhaften vierten Errichtungszustand besteht die erste Transporteinheit aus dem Maschinenträger, inklusive Triebstrang und Einhausung. Die zweite Transporteinheit besteht aus dem Elektromodul (mit Generator, Umrichter und/oder weiteren elektrischen Komponenten). Weitere Transporteinheiten können den Rotor entweder in seiner Gesamtheit oder in einzelnen Komponenten umfassen.

In einem beispielhaften fünften Errichtungszustand besteht die erste Transporteinheit aus der Gondel inklusive Maschinenträger, Elektromodul (mit Generator, Umrichter und/oder weiteren elektrischen Komponenten), Einhausung. Weitere Transporteinheiten können den Rotor entweder in seiner Gesamtheit oder in einzelnen Komponenten umfassen.

In einem beispielhaften sechsten Errichtungszustand besteht die erste Transporteinheit aus der Gondel inklusive Maschinenträger, Elektromodul (mit Generator, Umrichter und/oder weiteren elektrischen Komponenten), Einhausung und Rotornabe. Weitere Transporteinheiten können einzelne Komponenten des Rotors umfassen.

Die Reihenfolge, mit der die Transporteinheiten zur Spitze des Turms transportiert werden, kann der Reihenfolge entsprechen, in der die Transporteinheiten im Rahmen der vorgenannten Errichtungszustände aufgezählt sind. Möglich ist auch eine davon abweichende Reihenfolge beim Anheben der Transporteinheiten. Die Erfindung umfasst Variationen innerhalb der genannten Transporteinheiten. Beispielsweise ist es jeweils möglich, Elemente der Einhausung wahlweise einer ersten Transporteinheit oder einer zweiten Transporteinheit hinzuzufügen.

Jede Transporteinheit kann einen oder mehrere Anlenkpunkte aufweisen. Die Anlenkpunkte können so angeordnet sein, dass sie den Schwerpunkt der Transporteinheit zwischen sich anschließen, sodass ein stabiles Anheben der Transporteinheit möglich ist.

Je nach Gegebenheiten am Ort der Errichtung der Windenergieanlage sowie nach Verfügbarkeit von Arbeitsmitteln wie Kränen usw. können die Windenergieanlagenkomponenten am Boden in einen der Errichtungszustände gebracht werden. Mit dem erfindungsgemäßen Errichtungssystem wird also eine Mehrzahl von Möglichkeiten zur Verfügung gestellt, wie eine einzelne Windenergieanlage errichtet werden kann.

Die Erfindung betrifft außerdem ein nicht beanspruchtes Verfahren zum Anbringen einer Mehrzahl von Windenergieanlagenkomponenten an einem oberen Ende eines Turms eine Windenergieanlage. In einem ersten Schritt wird ein erster Errichtungszustand aus einer Mehrzahl von zur Verfügung stehenden Errichtungszuständen ausgewählt. Die Windenergieanlagenkomponenten werden am Boden in den ersten Errichtungszustand gebracht. Eine erste Transporteinheit und eine zweite Transporteinheit werden zum oberen Ende des Turms angehoben, wobei jede Transporteinheit eine oder mehrere Windenergieanlagenkomponenten umfasst. Das Verfahren kann mit weiteren Merkmalen fortgebildet werden, die im Zusammenhang des zuvor genannten Errichtungszustands beschrieben sind. Das Errichtungssystem kann mit weiteren Merkmalen fortgebildet werden, die im Zusammenhang dieses Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Windenergieanlage;
- Fig. 2:: eine perspektivische Darstellung einer erfindungsgemäßen Gondelkomponente im zusammengesetzten Zustand;
- Fig. 3:: eine schematische Ansicht von oben auf eine erfindungsgemäße Gondelkomponente im zusammengesetzten Zustand;
- Fig. 4:: eine schematische Ansicht von oben auf eine erfindungsgemäße Gondelkomponente im nicht zusammengesetzten Zustand;
- Fig. 5:: eine perspektivische Darstellung eines Getriebes, eines Schienensystems und eines Komponententrägers auf dem Grundriss einer erfindungsgemäßen Gondelkomponente;
- Fig. 6:: eine perspektivische Darstellung einer teilmontierten Gondelkomponente auf dem Turm einer Windenergieanlage sowie Elemente des Systems zur Wartung der Gondelkomponente;
- Fig. 7:: eine perspektivische Darstellung von Elementen des Systems zur Wartung einer erfindungsgemäßen Gondelkomponente;
- Fig. 8 bis 13:: verschiedene Errichtungszustände des erfindungsgemäßen Errichtungssystems;
- Fig. 14:: eine perspektivische Darstellung einer erfindungsgemäßen Gondelkomponente.

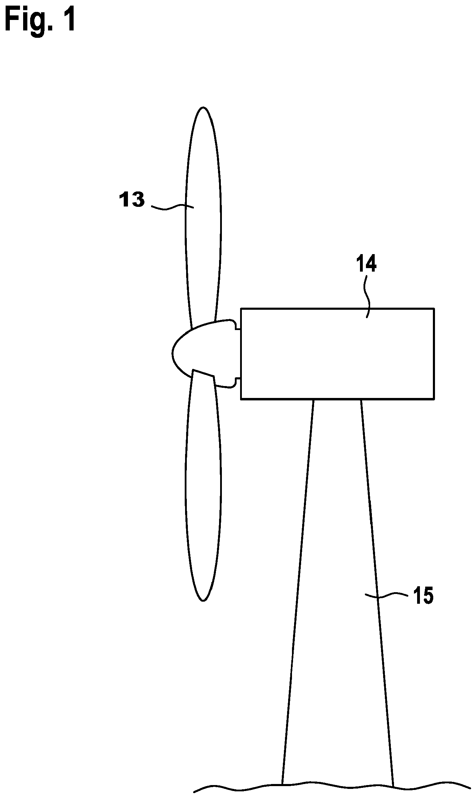

Bei einer in Fig. 1 gezeigten erfindungsgemäßen Windenergieanlage ist eine Gondel 14 drehbar auf einem Turm 15 gelagert. Ein Rotor 16 wird durch den Wind in Drehung versetzt und treibt über ein Getriebe 22 einen Generator 23 an. Der Generator 23 erzeugt elektrischen Strom, der über einen Umrichter 24 und einen Transformator 25 in ein Anschlussnetz eingespeist wird.

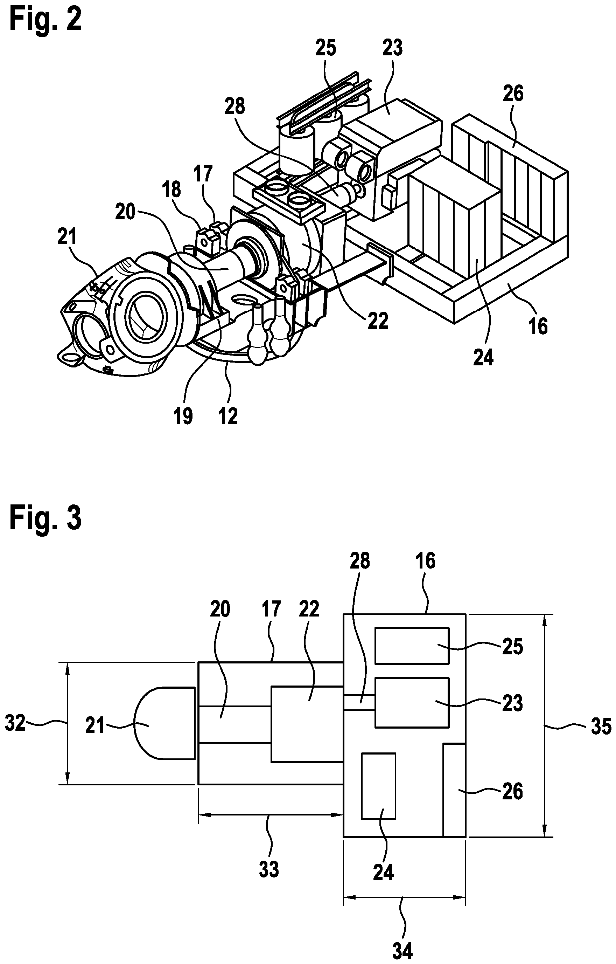

Im Inneren der Gondel 14 ist eine in Fig. 2 gezeigte Gondelkomponente angeordnet, die ein Elektromodul 16 und ein Maschinenträgermodul 17 umfasst. Das Maschinenträgermodul 17 umfasst Lagerböcke 18, 19, über die eine Rotorwelle 20 drehbar gelagert ist. An das vordere Ende der Rotorwelle 20 ist eine Rotornabe 21 angeschlossen. Das hintere Ende der Rotorwelle 20 ist mit der langsamen Welle eines Getriebes 22 verbunden. Das Maschinenträgermodul 17 umfasst einen Drehkranz 12, über den die Gondel 14 drehbar relativ zu dem Turm 15 gelagert ist.

Das Elektromodul 16 trägt einen Generator 23, einen Umrichter 24, einen Transformator 25 sowie Schaltschränke 26. Eine Eingangswelle 28 des Generators 23 ist mit der schnellen Welle des Getriebes 22 verbunden. Wenn die Rotorwelle 20 sich dreht, wird mit dem Generator 23 elektrische Energie erzeugt. Die elektrische Energie wird über den Umrichter 24 und den Transformator 25 auf eine Mittelspannung gebracht und in ein nicht dargestelltes Mittelspannungskabel eingespeist. Das Zusammenwirken zwischen dem Generator 23, dem Umrichter 24 und dem Transformator 25 wird durch eine Steuerung bestimmt, die in den Schaltschränken 26 untergebracht ist.

Das Elektromodul 16 und das Maschinenträgermodul 17 sind durch Schrauben miteinander verbunden. Die Verbindung ist so stabil, dass die Gondelkomponente als eine Einheit angehoben werden kann.

Gemäß der schematischen Darstellung in Fig. 3 haben das Maschinenträgermodul 17 und das Elektromodul 16 in einem horizontalen Schnitt betrachtet jeweils eine rechteckige Form. Die Längsausdehnung 33 des Maschinenträgermoduls 17 erstreckt sich parallel zu der Rotorwelle 20, die Querausdehnung 32 des Maschinenträgermoduls 17 erstreckt sich unter einem rechten Winkel zu der Rotorwelle 20. Die Querausdehnung 34 des Elektromoduls 16 ist parallel zu der Rotorwelle 20 ausgerichtet, die Längsausdehnung 35 des Elektromoduls 16 schneidet die Rotorwelle 20 unter einem rechten Winkel.

Der Generator 23 ist leicht außermittig in dem Elektromodul 16 angeordnet. Nimmt man einen Blickwinkel von dem Generator 23 in Richtung der Eingangswelle 28 an, so ist der Generator 23 gegenüber der Mitte leicht nach rechts verschoben. Ebenfalls in der rechten Hälfte ist der Transformator 25 angeordnet. In der linken Hälfte des Elektromoduls 16 sind der Umrichter 24 und die Schaltschränke 26 angeordnet.

Aus der Darstellung in Fig. 3 geht hervor, dass die Komponenten des Elektromoduls 16 alle in einem geringen Abstand zu der Drehachse der Gondel 14 angeordnet sind. Dies ergibt eine günstige Lastverteilung, bei der das Azimut-Lager verminderten Belastungen ausgesetzt ist.

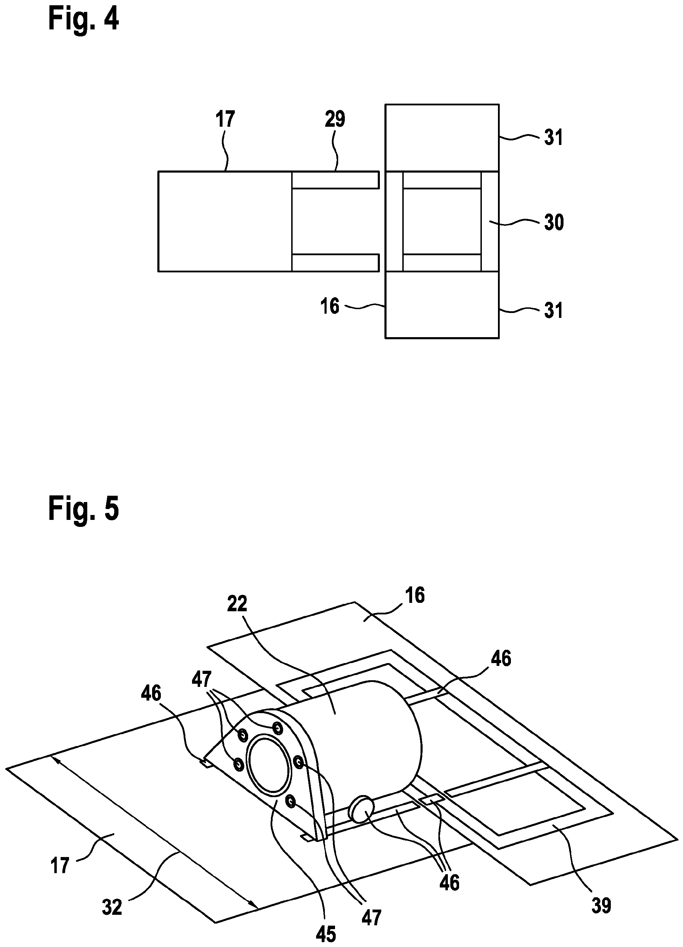

Gemäß Fig. 4 umfasst das Maschinenträgermodul 17 an seinem hinteren Ende ein Rahmenelement 29, das sich in Längsrichtung erstreckt. Das Elektromodul 16 umfasst einen Zentralrahmen 30, der in Verlängerung des Rahmenelements 29 angeordnet ist, wenn das Elektromodul 16 und das Maschinenträgermodul 17 im verbundenen Zustand sind. Der Zentralrahmen 30 trägt die schweren Komponenten des Elektromoduls 16, insbesondere den Generator 23. An den Zentralrahmen 30 schließen zwei Seitenrahmen 31 an, die die leichteren Komponenten des Elektromoduls 16 tragen, nämlich den Umrichter 24, den Transformator 25 und die Schaltschränke 26. Sowohl der Zentralrahmen 30 als auch die Seitenrahmen 31 erstrecken sich über die gesamte Querausdehnung des Elektromoduls 16. In Summe erstrecken der Zentralrahmen 30 und die beiden Seitenrahmen 31 sich über die gesamte Längsausdehnung des Elektromoduls 16.

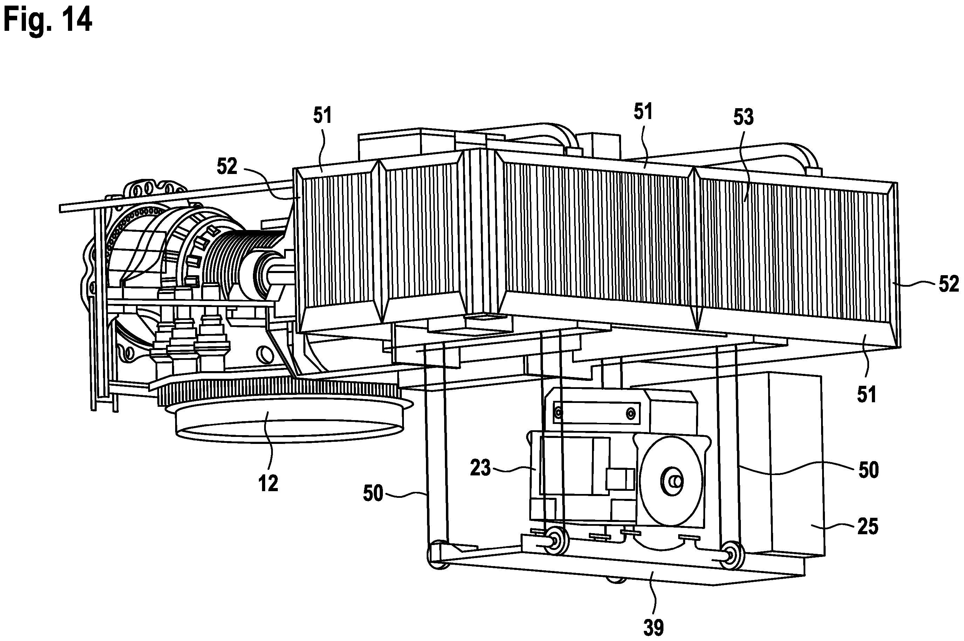

Bei der alternativen Ausführungsform gemäß Fig. 14 ist ein Komponententräger 39 vorgesehen, der den Generator 23 und den Umrichter 25 trägt. Wenn die Windenergieanlage in Betrieb ist, ist der Komponententräger 39 mit dem Zentralrahmen 30 des Elektromoduls 16 verschraubt. Zum Zwecke der Wartung oder Reparatur kann der Komponententräger 39 von dem Zentralrahmen 30 gelöst werden und über Seile 50 bis zum Boden herabgelassen werden. Die Seile 50 sind über eine nicht dargestellte Windisch angetrieben.

Über den Umfang des Elektromoduls 16 erstrecken sich horizontaler Rahmenstreben 51, die durch senkrechte Rahmenstreben 52 miteinander verbunden sind. Die zwischen den Rahmen streben 51, 52 eingeschlossenen Wandflächen sind durch Trapezbleche 53 ausgefüllt, die selbsttragend sind und in der Fläche nicht durch ein weiteres Rahmenskelett abgestützt sind.

Fig. 5 zeigt ein Getriebe 22 mit einem Getriebespant 45; das Getriebe 22 ist über Aufhängungselemente 47 an dem Getriebespant 45 aufgehängt. Zusätzlich sind die Grundrisse des Maschinenträgermoduls 17 und des Elektromoduls 16 gezeigt; der Getriebespant 45 erstreckt sich nicht über die gesamte Querausdehnung 32 des Maschinenträgermoduls. Das Getriebe kann über ein Schienensystem 46 aus dem Maschinenträgermodul 17 in das Elektromodul 16 gezogen werden; in dem Elektromodul kann das Getriebe über dem Komponententräger 39 positioniert werden.

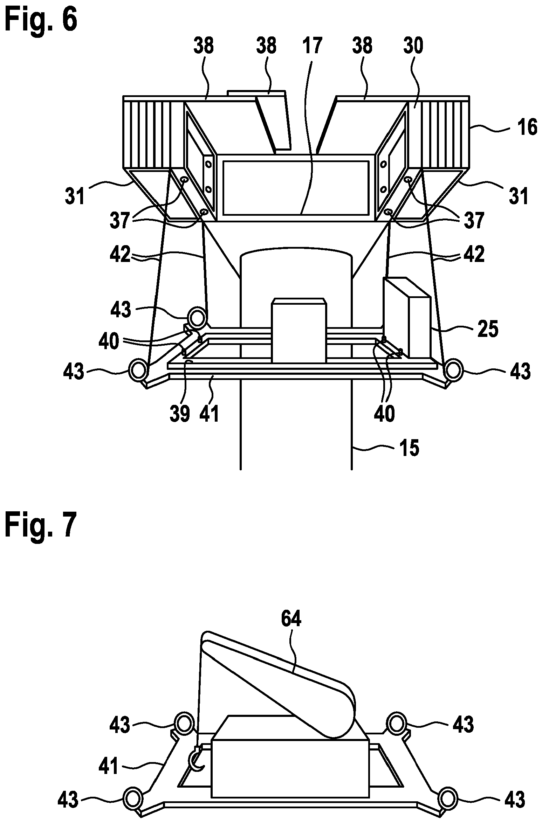

Fig. 6 zeigt eine perspektivische Ansicht auf die Windenergieanlage mit einem Turm 15, einem Maschinenträgermodul 17 und einem Elektromodul 16. Das Elektromodul 16 ist halb geöffnet und leer dargestellt. Das Dach 38 des Elektromoduls 16 besteht aus mehreren Segmenten; das mittlere Segment ist gegen die äußeren Segmente verschoben und gibt eine Öffnung frei. Der Generator 23 und der Transformator 25 ruhen, schematisch dargestellt, auf dem Komponententräger 39. Der Komponententräger 39 kann über vier Bolzen 40 mit dem Zentralrahmen 30 verbunden werden; der Zentralrahmen 30 weist dazu auf jeder Seite zwei Öffnungen 37 auf.

Der Komponententräger ruht auf einer Hebeplattform 41, wobei die Hebeplattform 41 über Seile 42 mit dem Zentralrahmen 30 des Elektromoduls 16 verbunden ist. Die Hebeplattform 41 ist Teil des Systems zur Wartung der erfindungsgemäßen Gondelkomponente. Mit Winden 43 der Hebeplattform 41 kann die freie Länge der Seile 42 verändert werden, wodurch ein vertikales Verfahren der Hebeplattform 41 bewirkt wird. Hierdurch wird ein Transport des Komponententrägers 39 sowie der Elemente Generator 23 und Transformator 25 zwischen dem Fuß des Turms 15 und dem Elektromodul 16 ermöglicht.

Fig. 7 zeigt eine Hebeplattform 41 mit Winden 43, die einen Servicekran 44 trägt. Der Komponententräger 41 und der Kran 44 sind Elemente des Systems zur Wartung einer erfindungsgemäßen Gondelkomponente. Der mit dem Servicekran 44 beladene Komponententräger 41 kann über die Seile 42 der Winden 43 mit dem Zentralrahmen 30 des Elektromoduls 16 verbunden werden. Der in Fig. 7 gezeigte Komponententräger 41 kann an Stelle des in Fig. 6 gezeigten Komponententrägers vertikal gegenüber der Gondelkomponente verfahren werden; der in Fig. 7 gezeigte Servicekran 44 kann an Stelle der in Fig. 6 gezeigten Elemente Generator 23 und Transformator 25 zwischen dem Fuß des Turms 15 und der Gondelkomponente transportiert werden. Wenn der Servicekran 44 mit dem Elektromodul 16 verbunden ist, kann er genutzt werden, um schwere Komponenten wie das Getriebe oder den Generator innerhalb der Gondel zu bewegen. Der Servicekran 44 kann jedoch auch genutzt werden, um andere Komponenten der Gondel oder Werkzeuge, die für die Wartung der Windenregieanlage benötigt werden, beispielsweise vom Fuß des Turmes zur Gondel zu heben.

Bei der Montage einer erfindungsgemäßen Windenergieanlage kann wie folgt vorgegangen werden. An einer Fertigungsstätte können das Maschinenträgermodul 17 und das Elektromodul 16 in einen vormontierten Zustand gebracht werden. Das Maschinenträgermodul 17 ist dann mit der Rotorwelle 20, dem Getriebe 22 und dem Drehkranz 12 bestückt. Das Elektromodul 16 ist mit dem Generator 23, dem Umrichter 24, dem Transformator 25 und den Schaltschränken 26 bestückt. Der Generator 23, der Umrichter 24 und der Transformator 25 sind elektrisch miteinander verbunden und so an die Steuerschränke 26 angeschlossen, dass bereits in der Fertigungsstätte eine vollständige Funktionsüberprüfung der Komponenten des Elektromoduls 16 durchgeführt werden kann.

Der Transport von der Fertigungsstätte zum Ort der Montage kann auf der Straße erfolgen. Beide Module 16, 17 haben eine Breite von 4 m, eine Höhe von nicht mehr als 4 m sowie eine Länge zwischen 7 m und 10 m. Angesichts dieser Dimensionen ist ein straßengebundener Transport mit überschaubarem Aufwand möglich.

Am Ort der Montage werden das Maschinenträgermodul 17 und das Elektromodul 16 durch Schrauben miteinander verbunden und die Eingangswelle 28 des Generators 23 an die schnelle Welle des Getriebes 22 angeschlossen. Die Gondelkomponente ist dann in einen zusammengesetzten Zustand. Nach Anbringen von weiteren Elementen, wie beispielsweise einer Einhausung, wird die fertige Gondel 14 angehoben und auf das obere Ende des Turms 15 aufgesetzt. Je nach Abmessung der Windenergieanlage und der Verfügbarkeit von Kränen kann es wirtschaftlicher sein, die Gondel getrennt in einzelnen Modulen auf den Turm zu heben und dort zu verbinden. Die einzelnen Module, Maschinenträgermodul 17 und Elektromodul 16, können auch stückweise in Elementen auf den Turm gehoben werden und dort montiert werden. Zwischen der Gondel 14 und dem Turm 15 wird ein Azimutlager montiert, sodass die Gondel 14 sich relativ zu dem Turm 15 drehen kann. Ein Mittelspannungskabel wird von dem Transformator 25 über das Maschinenträgermodul 16 und das Innere des Turms 15 zum Turmfuß geführt und dort an ein Anschlussnetz angeschlossen.

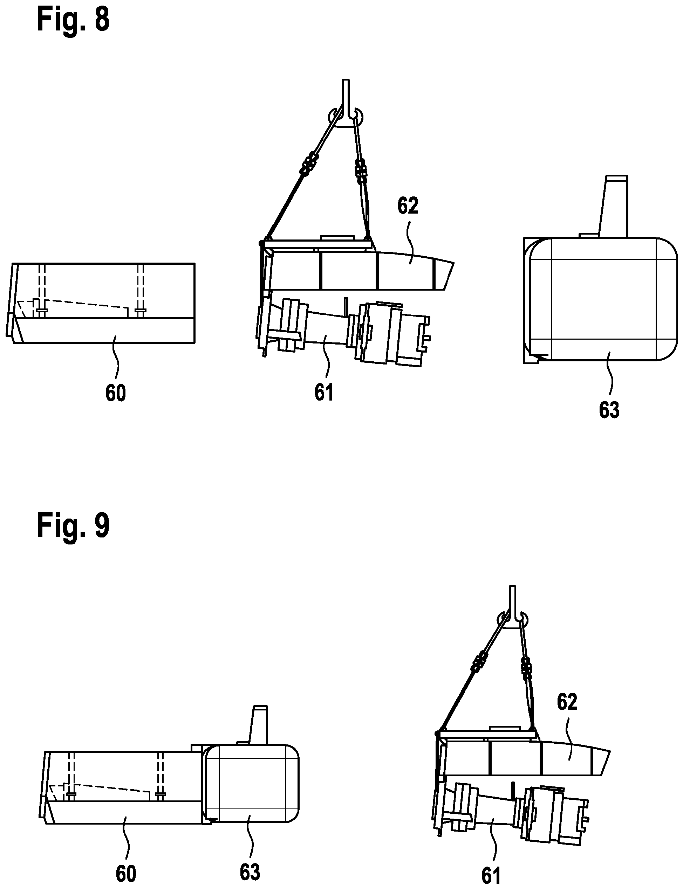

Gemäß den Fig. 8 bis 13 gibt es verschiedene Möglichkeiten, wie beim Errichten der Windenergieanlage vorgegangen werden kann. In Fig. 8 ist ein erster Errichtungszustand gezeigt, in den die Windenergieanlagenkomponente am Boden gebracht werden können. Als erste Transporteinheit wird der Maschinenträger 60 mit den Seitenwänden der Einhausung zum oberen Ende des Turms 15 angehoben. Als zweite Transporteinheit wird der Triebstrang 61 mit dem Dach 62 der Einhausung angehoben. Als dritte Transporteinheit wird das Elektromodul 63 mit den elektrischen Komponenten angehoben. Anschließend wird der Rotor als Ganzes oder in Komponenten hinzugefügt.

In Fig. 9 ist ein zweiter Errichtungszustand gezeigt, in den die Windenergieanlagenkomponente am Boden gebracht werden können. Die erste Transporteinheit wird durch den Maschinenträger 60 mit den Seitenwänden der Einhausung und das Elektromodul 63 gebildet. Die zweite Transporteinheit wird durch den Triebstrang 61 mit dem Dach 62 der Einhausung gebildet. Anschließend wird der Rotor als Ganzes oder in Komponenten hinzugefügt.

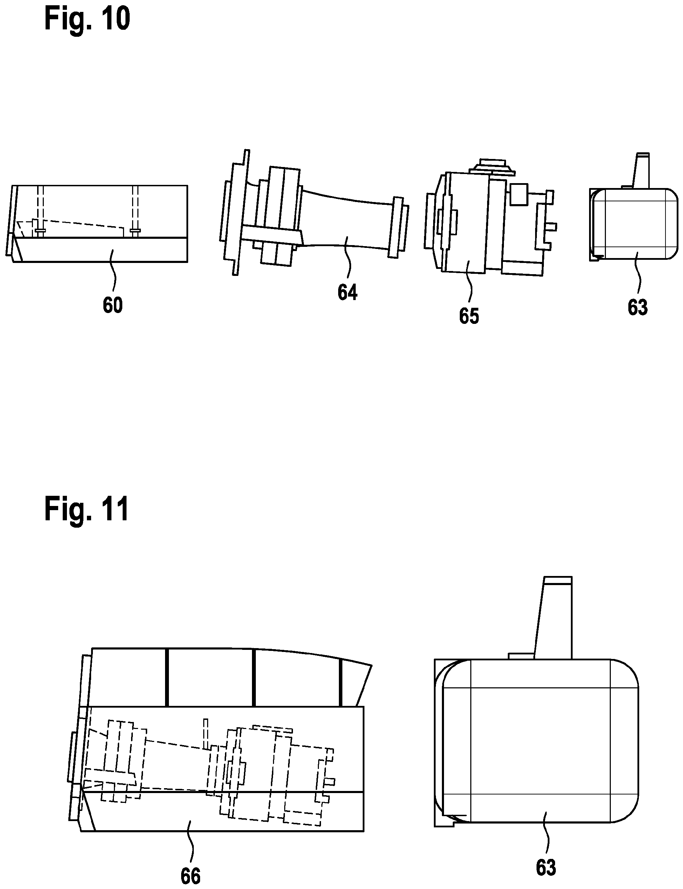

Bei dem dritten Errichtungszustand in Fig. 10 wird die erste Transporteinheit durch den Maschinenträger 60 mit den Seitenwänden der Einhausung gebildet. Die zweite Transporteinheit wird durch den Großteil-Triebstrang 64 ohne dass Getriebe 65 gebildet. Das Getriebe 65 bildet die dritte Transporteinheit. Das Elektromodul 63 bildet die vierte Transporteinheit. Anschließend wird der Rotor als Ganzes oder in Komponenten hinzugefügt.

Die Fig. 11 zeigt einen vierten Errichtungszustand, bei dem die erste Transporteinheit 66 den Maschinenträger 60, den Triebstrang 61 und die Einhausung umfasst. Das Elektromodul 63 bildet die zweite Transporteinheit. Anschließend wird der Rotor als Ganzes oder in Komponenten hinzugefügt.

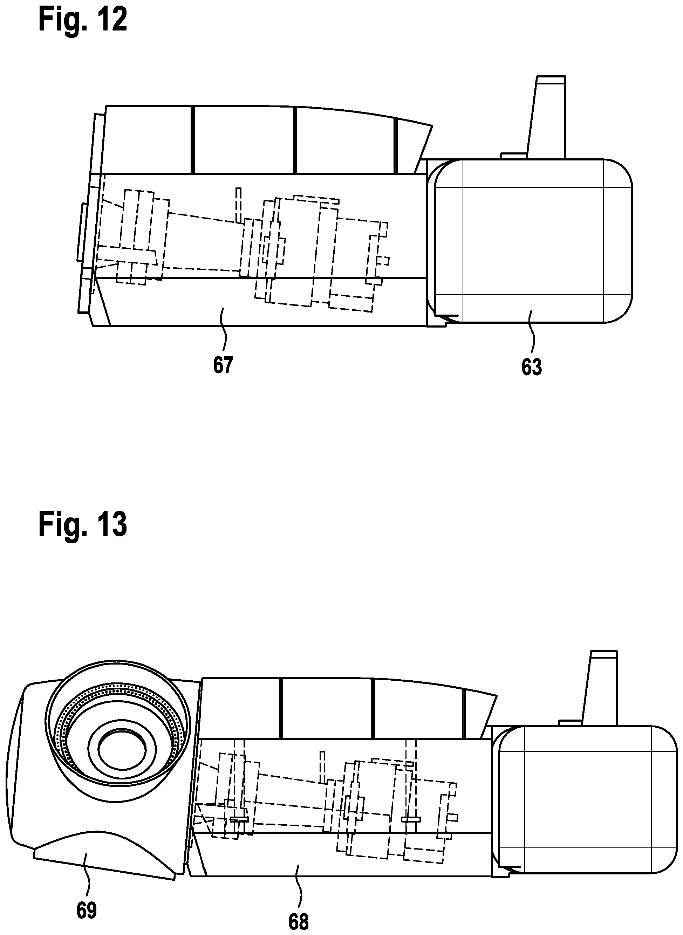

Bei dem fünften Errichtungszustand gemäß Fig. 12 umfasst die erste Transporteinheit 67 die gesamte Gondel mit dem Maschinenträger, dem Triebstrang, der Einhausung und dem Elektromodul. Anschließend wird der Rotor als Ganzes oder in Komponenten hinzugefügt.

Bei dem sechsten Errichtungszustand gemäß Fig. 13 umfasst die Gondel zusätzlich dazu die Rotornabe 69. An die Rotornabe 69 werden nacheinander die Rotorblätter angeschlossen, wobei jedes der Rotorblätter eine weitere Transporteinheit bildet.

## Patentansprüche

1. Gondelkomponente für eine Gondel (14) einer Windenergieanlage, umfassend ein Maschinenträgermodul (17) und ein Elektromodul (16), wobei das Maschinenträgermodul (17) und das Elektromodul (16) jeweils in Längsausdehnung (33, 35) größer sind als in Querausdehnung (32, 34), wobei in einem zusammengesetzten Zustand der Gondelkomponente das Maschinenträgermodul (17) mit seiner Längsausdehnung (33) entlang einer sich durch die Achse einer Rotorwelle (20) erstreckenden senkrechten Ebene ausgerichtet ist und wobei das Elektromodul (16) mit seiner Längsausdehnung (35) die sich durch die Achse der Rotorwelle (20) erstreckende senkrechte Ebene schneidet, wobei das Elektromodul (16) einen Komponententräger (39) umfasst, wobei der Komponententräger (39) abnehmbar an einem Zentralrahmen (30) des Elektromoduls (16) befestigt ist und wobei der Komponententräger (39) Elemente (22,23,24,25,26) des Elektromoduls (16) trägt, **dadurch gekennzeichnet, dass** der Komponententräger (39) auf einer Hebeplattform (41) ruht, wobei die Hebeplattform (41) über Seile (42) mit dem Zentralrahmen (30) des Elektromoduls (16) verbunden ist, wobei mit Winden (43) der Hebeplattform (41) die freie Länge der Seile (42) veränderbar ist, wodurch ein vertikales Verfahren der Hebeplattform (41) bewirkbar ist.

2. Gondelkomponente nach Anspruch 1, **dadurch gekennzeichnet, dass** das Maschinenträgermodul (17) eine Aufnahme (18, 19) für eine Rotorwelle (20), eine Aufnahme für ein Getriebe (22) umfasst und/oder eine Aufnahme für einen Generator (23) umfasst.

3. Gondelkomponente nach 1 oder 2, **dadurch gekennzeichnet, dass** das Maschinenträgermodul (17) einen Drehkranz (12) umfasst, der dazu ausgelegt ist, eine drehbare Verbindung zwischen dem Maschinenträgermodul (17) und einem Turm (15) einer Windenergieanlage zu bilden.

4. Gondelkomponente nach einem der Ansprüche 1 bis 3, **dadurch gekennzeichnet, dass** das Elektromodul (16) eine Aufnahme für einen Generator (23) umfasst.

5. Gondelkomponente nach Anspruch 4, **dadurch gekennzeichnet, dass** ein Generator (23) mit der Generatoraufnahme verbunden ist und dass eine Eingangswelle (28) des Generators (23) außermittig in dem Elektromodul (16) angeordnet ist.

6. Gondelkomponente nach einem der Ansprüche 1 bis 5, **dadurch gekennzeichnet, dass** das Elektromodul (16) eine Aufnahme für einen Umrichter (24) umfasst.

7. Gondelkomponente nach einem der Ansprüche 1 bis 6, **dadurch gekennzeichnet, dass** das Elektromodul (16) eine Aufnahme für einen Transformator (25) umfasst.

8. Gondelkomponente nach Anspruch 7, **dadurch gekennzeichnet, dass** ein Mittelspannungskabel an den Transformator (25) angeschlossen ist, das im zusammengesetzten Zustand der Gondelkomponente über das Maschinenträgermodul (17) in Richtung eines Turms (15) einer Windenergieanlage geführt ist.

9. Gondelkomponente nach einem der Ansprüche 1 bis 8, **dadurch gekennzeichnet, dass** das Elektromodul ein Kühlsystem umfasst, das dazu ausgelegt ist, einen Generator (23), einen Umrichter (24), einen Transformator (25) und/oder ein Getriebe (23) zu kühlen.

10. Gondelkomponente nach einem der Ansprüche 1 bis 9, **dadurch gekennzeichnet, dass** sich der Zentralrahmen (30) nur über einen Teil der Längsausdehnung (35) des Elektromoduls (16) erstreckt und dass an den Zentralrahmen (30) zwei Seitenrahmen (31) anschließen.

11. Gondelkomponente nach einem der Ansprüche 1 bis 10, **dadurch gekennzeichnet, dass** in einem vormontierten Zustand des Elektromoduls (16) ein Generator (23), ein Umrichter (24), ein Transformator (25) und/oder eine Steuerung (26) auf dem Elektromodul (16) installiert sind und so miteinander verbunden sind, dass ein Funktionstest der Komponenten möglich wird.

12. Gondelkomponente nach einem der Ansprüche 1 bis 11, **dadurch gekennzeichnet, dass** die Querausdehnung (34) des Elektromoduls (16) um weniger als 50 %, vorzugsweise weniger als 20 %, weiter vorzugsweise weniger als 10 % von der Querausdehnung (32) des Maschinenträgermoduls (17) abweicht.

13. Gondelkomponente nach einem der Ansprüche 1 bis 12, **dadurch gekennzeichnet, dass** die Querausdehnung (32) des Maschinenträgermoduls (17) und/oder die Querausdehnung (34) des Elektromoduls (16) zwischen 2 m und 6 m, vorzugsweise zwischen 3 m und 5 m, weiter vorzugsweise zwischen 3,5 m und 4,5 m liegen.

14. Verfahren zum Montieren einer Gondelkomponente einer Windenergieanlage gemäß einem der Ansprüche 1-13, bei dem ein Maschinenträgermodul (17) und ein Elektromodul (16) zu einem Montageort transportiert, wobei das Maschinenträgermodul (17) und/oder das Elektromodul (16) während des Transports in Längsrichtung (33, 35) ausgerichtet sind, und bei dem das Maschinenträgermodul (17) und das Elektromodul (16) am Montageort miteinander verbunden werden, sodass eine Querseite des Maschinenträgermoduls (17) an eine Längsseite des Elektromoduls (16) anstößt, wobei das Elektromodul (16) einen Komponententräger (39) umfasst, wobei der Komponententräger (39) abnehmbar an einem Zentralrahmen (30) des Elektromoduls (16) befestigt ist und wobei der Komponententräger (39) Elemente (22,23,24,25,26) des Elektromoduls (16) trägt.

## Claims

1. Nacelle component for a nacelle (14) of a wind turbine, comprising a machine support module (17) and an electrical module (16), wherein the machine support module (17) and the electrical module (16) in each case have a greater longitudinal extent (33, 35) than transverse extent (32, 34), wherein, in an assembled state of the nacelle component, the machine support module (17) is oriented with its longitudinal extent (33) along a perpendicular plane which extends through the axis of a rotor shaft (20), and wherein the longitudinal extent (35) of the electrical module (16) intersects the perpendicular plane which extends through the axis of the rotor shaft (20), wherein the electrical module (16) comprises a component support (39), wherein the component support (39) is removably secured to a central frame (30) of the electrical module (16) and wherein the component support (39) carries elements (22, 23, 24, 25, 26) of the electrical module (16), **characterized in that** the component support (39) rests on a lifting platform (41), wherein the lifting platform (41) is connected via ropes (42) to the central frame (30) of the electrical module (16), wherein the free length of the ropes (42) can be changed using winches (43) of the lifting platform (41), such that it is possible to bring about vertical translation of the lifting platform (41).

2. Nacelle component according to Claim 1, **characterized in that** the machine support module (17) comprises a mounting (18, 19) for a rotor shaft (20), a mounting for a gearbox (22) and/or a mounting for a generator (23).

3. Nacelle component according to 1 or 2, **characterized in that** the machine support module (17) comprises a slewing ring (12) which is designed so as to form a rotatable connection between the machine support module (17) and a tower (15) of a wind turbine.

4. Nacelle component according to one of Claims 1 to 3, **characterized in that** the electrical module (16) comprises a mounting for a generator (23).

5. Nacelle component according to Claim 4, **characterized in that** a generator (23) is connected to the generator mounting, and **in that** an input shaft (28) of the generator (23) is arranged non-centrally in the electrical module (16).

6. Nacelle component according to one of Claims 1 to 5, **characterized in that** the electrical module (16) comprises a housing for a convertor (24).

7. Nacelle component according to one of Claims 1 to 6, **characterized in that** the electrical module (16) comprises a mounting for a transformer (25).

8. Nacelle component according to Claim 7, **characterized in that** a medium-voltage cable is connected to the transformer (25) and, in the assembled state of the nacelle component, passes via the machine support module (17) toward a tower (15) of a wind turbine.

9. Nacelle component according to one of Claims 1 to 8, **characterized in that** the electrical module comprises a cooling system which is designed so as to cool a generator (23), a convertor (24), a transformer (25), and/or a gearbox (23).

10. Nacelle component according to one of Claims 1 to 9, **characterized in that** the central frame (30) extends only over a part of the longitudinal extent (35) of the electrical module (16), and **in that** two side frames (31) are attached to the central frame (30) .

11. Nacelle component according to one of Claims 1 to 10, **characterized in that**, in a premounted state of the electrical module (16), a generator (23), a convertor (24), a transformer (25), and/or a control unit (26) are installed on the electrical module (16) and are connected to one another such that a functional test of the components is possible.

12. Nacelle component according to one of Claims 1 to 11, **characterized in that** the transverse extent (34) of the electrical module (16) deviates from the transverse extent (32) of the machine support module (17) by less than 50%, preferably less than 20%, and more preferably less than 10%.

13. Nacelle component according to one of Claims 1 to 12, **characterized in that** the transverse extent (32) of the machine support module (17) and/or the transverse extent (34) of the electrical module (16) lie between 2 m and 6 m, preferably between 3 m and 5 m, and more preferably between 3.5 m and 4.5 m.

14. Method for mounting a nacelle component of a wind turbine according to one of Claims 1 to 13, in which a machine support module (17) and an electrical module (16) are transported to a mounting site, wherein, during transportation, the machine support module (17) and/or the electrical module (16) are oriented lengthwise (33, 35), and in which the machine support module (17) and the electrical module (16) are connected to each other at the mounting site such that a transverse side of the machine support module (17) abuts a longitudinal side of the electrical module (16), wherein the electrical module (16) comprises a component support (39), wherein the component support (39) is removably secured to a central frame (30) of the electrical module (16) and wherein the component support (39) carries elements (22, 23, 24, 25, 26) of the electrical module (16).

## Revendications

1. Composant de nacelle destiné à une nacelle (14) d'une éolienne, ledit composant comprenant un module de support machine (17) et un module électrique (16), le module de support de machine (17) et le module électrique (16) présentant chacun une dimension longitudinale (33, 35) plus grande qu'une dimension transversale (32, 34), lorsque le composant de nacelle est assemblé, le module de support de machine (17) étant orienté de sorte que sa dimension longitudinale (33) se trouve dans un plan vertical passant par l'axe d'un arbre de rotor (20), et le module électrique (16) ayant sa dimension longitudinale (35) qui coupe le plan vertical passant par l'axe de l'arbre de rotor (20), le module électrique (16) comprenant un support de composants (39), le support de composants (39) étant fixé de manière amovible à un cadre central (30) du module électrique (16) et le support de composants (39) comprenant des éléments (22, 23, 24, 25, 26) du module électrique (16), **caractérisé en ce que** le support de composants (39) repose sur une plate-forme de levage (41), la plate-forme de levage (41) étant reliée au cadre central (30) du module électrique (16) par des câbles (42), la longueur libre des câbles (42) pouvant être modifiée au moyen de treuils (43) de la plate-forme de levage (41), ce qui permet de générer un déplacement vertical de la plate-forme de levage (41).

2. Composant de nacelle selon la revendication 1, **caractérisé en ce que** le module de support de machine (17) comprend un logement (18, 19) destiné à un arbre de rotor (20), un logement destiné à une transmission (22) et/ou un logement destiné à un générateur (23).

3. Composant de nacelle selon 1 ou 2, **caractérisé en ce que** le module de support de machine (17) comprend une couronne de pivotement (12) qui est conçue pour former une liaison rotative entre le module de support de machine (17) et une tour (15) d'une éolienne.

4. Composant de nacelle selon l'une des revendications 1 à 3, **caractérisé en ce que** le module électrique (16) comprend un logement destiné à un générateur (23).

5. Composant de nacelle selon la revendication 4, **caractérisé en ce qu'**un générateur (23) est relié au logement de générateur et **en ce qu'**un arbre d'entrée (28) du générateur (23) est disposé de manière excentrée dans le module électrique (16).

6. Composant de nacelle selon l'une des revendications 1 à 5, **caractérisé en ce que** le module électrique (16) comprend un logement destiné à un convertisseur (24).

7. Composant de nacelle selon l'une des revendications 1 à 6, **caractérisé en ce que** le module électrique (16) comprend un logement destiné à un transformateur (25).

8. Composant de nacelle selon la revendication 7, **caractérisé en ce qu'**un câble à moyenne tension est raccordé au transformateur (25) qui est guidé en direction d'une tour (15) d'une éolienne par le biais du module de support de machine (17) lorsque le composant de nacelle est monté.

9. Composant de nacelle selon l'une des revendications 1 à 8, **caractérisé en ce que** le module électrique comprend un système de refroidissement qui est conçu pour refroidir un générateur (23), un convertisseur (24), un transformateur (25) et/ou une transmission (23).

10. Composant de gondole selon l'une des revendications 1 à 9, **caractérisé en ce que** le cadre central (30) ne s'étend que sur une partie de la dimension longitudinale (35) du module électrique (16) et **en ce que** deux cadres latéraux (31) sont adjacents au cadre central (30).

11. Composant de nacelle selon l'une des revendications 1 à 10, **caractérisé en ce que** le module électrique (16) est pré-assemblé, un générateur (23), un convertisseur (24), un transformateur (25) et/ou une commande (26) sont installés sur le module électrique (16) et sont reliés entre eux de façon à permettre un test de fonctionnement des composants.

12. Composant de gondole selon l'une des revendications 1 à 11, **caractérisé en ce que** la dimension transversale (34) du module électrique (16) s'écarte de moins de 50 %, de préférence de moins de 20 %, plus préférablement de moins de 10 % de la dimension transversale (32) du module de support de machine (17).

13. Composant de gondole selon l'une des revendications 1 à 12, **caractérisé en ce que** la dimension transversale (32) du module de support de machine (17) et/ou la dimension transversale (34) du module électrique (16) est comprise entre 2 m et 6 m, de préférence entre 3 m et 5 m, plus préférablement entre 3,5 m et 4,5 m.

14. Procédé d'assemblage d'un composant de nacelle d'une éolienne selon l'une des revendications 1 à 13, procédé dans lequel un module de support de machine (17) et un module électrique (16) sont transportés vers un site d'assemblage, le module de support de machine (17) et/ou le module électrique (16) étant orienté(s) dans la direction longitudinale (33, 35) pendant le transport, et dans lequel le module de support de machine (17) et le module électrique (16) sont reliés entre eux sur le site d'installation de sorte qu'un côté transversal du module de support de machine (17) soit en butée contre un côté longitudinal du module électrique (16), le module électrique (16) comprenant un support de composants (39), le support de composants (39) étant fixé de manière amovible à un cadre central (30) du module électrique (16) et le support de composants (39) portant des éléments (22, 23, 24, 25, 26) du module électrique (16).
